# EUROPÄISCHE PATENTSCHRIFT

(11) **EP 0 731 619 B1**
(45) Veröffentlichungstag und Bekanntmachung des Hinweises auf die Patenterteilung: **29.12.2004**
(21) Anmeldenummer: 96103268.7
(22) Anmeldetag: 02.03.1996
(51) Int. Cl.: H04Q 5/02, H04B 10/24

(54) **Breitbandkommunikationssystem und Verfahren dazu**
Broadband communication system and method
Système de communication à large bande et son procédé

(30) Priorität: 09.03.1995 DE 19508394
(43) Veröffentlichungstag der Anmeldung: 11.09.1996
(73) Patentinhaber: ALCATEL, 75008 Paris (FR)
(72) Erfinder: Beller, Dieter, 70825 Korntal-Münchingen (DE); Grammel, Gert, 73066 Uhingen (DE); Elze, Gerhard, 92160 Autony (FR)
(74) Vertreter: Schätzle, Albin, Dipl.-Phys.

(56) Entgegenhaltungen:
- EP-A- 0 234 280
- EP-A- 0 318 335
- EP-A- 0 378 087
- EP-A- 0 727 883

## Beschreibung

Die Erfindung betrifft ein Breitbandkommunikationssystem nach dem Oberbegriff des Patentanspruchs 1, und ein Verfahren dazu.

Das Breitbandkommunikationssystem hat die Struktur eines Breitbandverteilnetzes.

Breitbandverteilnetze als solche sind z.B. aus "Der Fernmeldeingenieur" Heft 8/1994, Seiten 5-10, Heidecker Verlag bekannt. Es ist ein Breitbandverteilnetz beschrieben, das neben verschiedenen Arten von unidirektionalen TV-Diensten auch bidirektionale, interaktive Videodienste zur Verfügung stellt. Die Teilnehmer werden über einen Vorwärtskanal mit Fernseh- und Videosignalen versorgt, und können über einen Rückkanal ihr teilnehmerindividuelles Videosignal beim Server anfordern. Das Breitbandverteilnetz dient somit zum einen zum Verteilen von Fernsehsignalen und zum anderen der Kommunikation zwischen Teilnehmer und Server. Ein Nachteil des Breitbandverteilnetzes ist, daß die Kommunikation zwischen Teilnehmer und Server darauf beschränkt ist, daß die Teilnehmer ein vom Server offeriertes Angebot annehmen oder ablehnen.

In DE 2917 978 ist ein Kabelkommunikationssystem, bestehend aus wenigstens einer Teilnehmerstation mit Untereinheiten und einer Zentraleinheit, die über ein Koaxialkabel untereinander in Verbindung stehen, beschrieben. Zwischen der Zentraleinheit und jeder Teilnehmerstation mit Untereinheit erfolgt eine frequenzmultiplexe und zeitmultiplexe Signalübertragung. Die Signalübertragung von allen Teilnehmerstationen zur Zentraleinheit einerseits und von der Zentraleinheit zu allen Teilnehmerstationen andererseits wird über zwei unterschiedliche Trägerfrequenzen vorgenommen. Die Zentraleinheit fragt jede Teilnehmerstation im Zeitmultiplexverfahren laufend nach Bereitschaft, Störung, Alarmmeldung, Funktionswünschen ab.

In dem Buch "ATM - Die Technik des Breitband-ISDN", von G. Siegmund, Decker's Verlag 1993, ist auf den Seiten 73-77 ein Netzzugagng zu einem Breitband dienstintegrierenden digitalen Netz, dem sog. B-ISDN, beschrieben. Teilnehmerendgeräte, insbesondere Computer, sind über eine Busstruktur mit dem Breitbandnetz verbunden. Den Teilnehmern werden zur Übertragung von Informationen Übertragungskanäle zugewiesen. Damit Teilnehmer miteinander kommunizieren können, werden Vermittlungsstellen benötigt.

Es ist deshalb Aufgabe der Erfindung, ein Breitbandkommunikationssystem zur Verfügung zu stellen, das Teilnehmern flexiblere Anwendungen ermöglicht.

Diese Aufgabe wird durch die Lehre der unabhängigen Patentansprüche 1, und 10 gelöst.

Vorteilhafte Ausgestaltungen sind den abhängigen Patentansprüchen zu entnehmen.

Ein besonderer Vorteil der Erfindung ist die Möglichkeit der Rechnervernetzung über ein Breitbandkommunikationssystem.

Ein weiterer Vorteil ist aufgrund der Verwendung eines Kollisionsüberwachungsverfahrens die Flexibilität bei der Zuschaltung weiterer Teilnehmerendgeräte.

Im folgenden wird die Erfindung anhand von zwei Ausführungsbeispielen unter Zuhilfenahme der Figuren 1 bis 6 erläutert. Es zeigen:
- Fig. 1: eine schematische Darstellung eines ersten Ausführungsbeispiels des erfindungsgemäßen Breitbandkommunikationssystemes in Verbindung mit fünf Teilnehmern,
- Fig. 2: einen schematisch dargestellten Aufbau einer Zentrale des erfindungsgemäßen Breitbandkommunikationssystemes aus Fig. 1,
- Fig. 3: einen schematisch dargestellten Aufbau eines Breitbandnetzabschlusses des erfindungsgemäßen Breitbandkommunikationssystemes aus Fig. 1,
- Fig. 4: ein Leistungsdichtespektrum,
- Fig. 5: eine schematische Darstellung eines zweiten Ausführungsbeispiels des erfindungsgemäßen Breitbandkommunikationssystemes in Verbindung mit zwei Teilnehmern, und
- Fig. 6: einen schematisch dargestellten Aufbau eines Breitbandnetzabschlusses des erfindungsgemäßen Breitbandkommunikationssystemes aus Fig. 5.

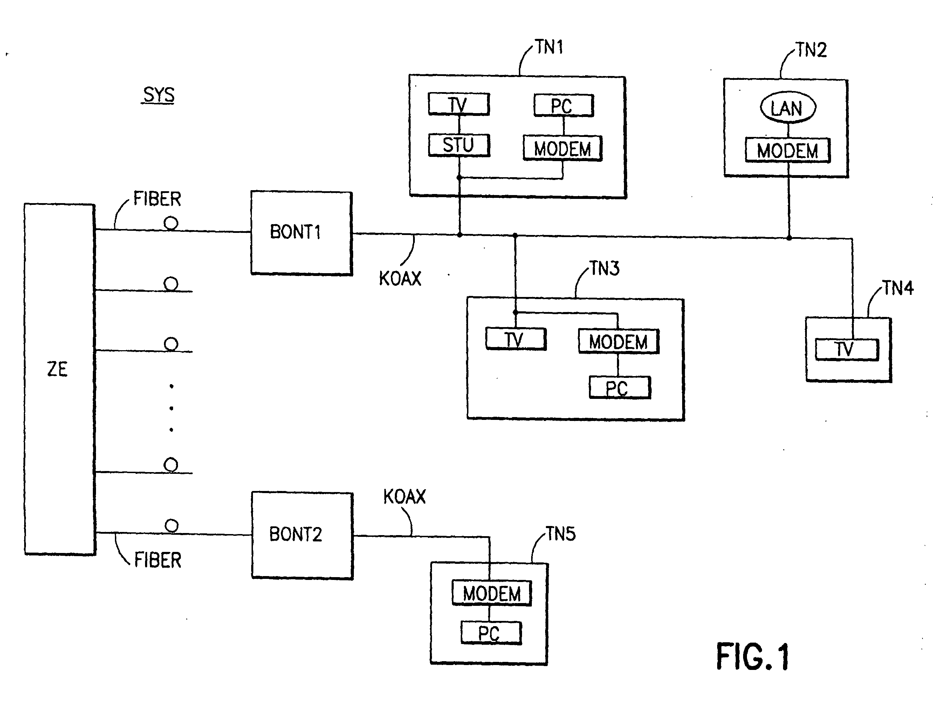

Ein erstes Ausführungsbeispiel der Erfindung wird nun anhand der Figuren 1 bis 4 beschrieben.

Fig. 1 zeigt ein Breitbandkommunikationssystem in Verbindung mit fünf Teilnehmern. Das Breitbandkommunikationssystem SYS hat eine Zentrale ZE und zwei Breitbandnetzabschlüsse BONT1, BONT2. Die Breitbandnetzabschlüsse BONT1, BONT2 sind jeweils über eine optische Glasfaserleitung FIBER mit der Zentrale ZE verbunden. Die Zentrale ZE hat mehr als zwei optische Glasfaserleitungsanschlüsse zum Anschluß weiterer Breitbandnetzabschlüsse BONT. Der erste Breitbandnetzabschluß BONT1 ist über eine elektrische Koaxialleitung KOAX mit vier Teilnehmern TN1, TN2, TN3, TN4 verbunden. Der zweite Breitbandnetzabschluß BONT2 ist über eine elektrische Koaxialleitung KOAX mit einem fünften Teilnehmer TN5 verbunden.

Der erste Teilnehmer TN1 hat einen Fernseher TV, einen Set-Top-Konverter STU, ein Modem MODEM und ein Teilnehmerendgerät PC. Der Fernseher TV ist über den Set-Top-Konverter STU mit der elektrischen Koaxialleitung KOAX verbunden. Das Teilnehmerendgerät PC, das z.B. ein Datenendgerät PC oder z.B. ein Computer PC ist, ist über das Modem MODEM mit der elektrischen Koaxialleitung KOAX verbunden.

Der zweite Teilnehmer TN2 hat ein Modem MODEM und ein lokales Netzwerk LAN. Das lokale Netzwerk LAN, ein sog. local area network LAN, ist über das Modem MODEM mit der elektrischen Koaxialleitung verbunden.

Der dritte Teilnehmer TN3 hat einen Fernseher TV, ein Modem MODEM und ein Teilnehmerendgerät PC. Der Fernseher TV ist direkt mit der elektrischen Koaxleitung KOAX verbunden; das Teilnehmerendgerät PC, z.B. ein Computer PC, ist über das Modem MODEM mit der elektrischen Koaxleitung KOAX verbunden.

Der vierte Teilnehmer TN4 hat einen Fernseher TV, der direkt mit der elektrischen Koaxleitung KOAX verbunden ist.

Der fünfte Teilnehmer TN5 hat ein Modem MODEM und ein Teilnehmerendgerät PC. Das Teilnehmerendgerät PC, z.B. ein Datenendgerät PC, ist über das Modem MODEM und die elektrische Koaxialleitung KOAX mit dem zweiten Breitbandnetzabschluß BONT2 verbunden:

Die Zentrale ZE dient dem Verteilen von Fernsehsignalen, Videosignalen, Rundfunksignalen und Datensignalen. Die von der Zentrale ZE zu übertragenden Signale werden über optische Glasfaserleitungen FIBER zu den Breitbandnetzabschlüssen BONT1, BONT2 übertragen. In den Breitbandnetzabschlüssen BONT1, BONT2 findet eine optisch/elektrische Wandlung statt. Die von den Breitbandnetzabschlüssen BONT1, BONT2 zu übertragenden Signale werden jeweils über eine elektrische Koaxialleitung KOAX zu einem TN5 oder mehreren TN1, TN2, TN3, TN4 Teilnehmern übertragen. Die Übertragung von Signalen von der Zentrale ZE zu den Teilnehmern TN1 bis TN5 erfolgt in einem Vorwärtskanal mit hoher Datenrate, in einem Frequenzbereich von ca. 50 MHz bis 862 MHz. Die Übertragung von Signalen von den Teilnehmern TN1 bis TN5 zur Zentrale ZE erfolgt in einem Rückkanal mit niedriger Datenrate in einem Frequenzbereich von ca. 5 MHz bis 45 MHz. Jeder Teilnehmer TN1 bis TN5 kann grundsätzlich alle von der Zentrale ZE übertragenen Signale empfangen. Manche Signale sind jedoch verschlüsselt und nur von Teilnehmern mit Berechtigung zu entschlüsseln. Die Teilnehmer TN1, TN3, TN4 können Fernseh- und Rundfunksignale auf ihrem Fernseher TV darstellen lassen.

Spezielle, verschlüsselte Fernsehsignale und die Videosignale können nur von Teilnehmern TN1 mit Set-Top-Konverter STU entschlüsselt und auf dem Fernseher TV dargestellt werden. Über den Set-Top-Konverter STU kann Teilnehmer TN1 aus einem von der Zentrale ZE angebotenen Katalog von Videofilmen spezielle Videofilme von der Zentrale ZE anfordern. Die Zentrale ZE sendet den angeforderten Videofilm in Form von Videosignalen mit der ausschließlichen Berechtigung der Entschlüsselung für Teilnehmer TN1 an alle Teilnehmer TN1 bis TN5. Nur Teilnehmer TN1 ist berechtigt und in der Lage, über den Set-Top-Konverter STU die angeforderten Videosignale zu entschlüsseln.

Die Teilnehmer TN1, TN2, TN3, TN5 haben die Möglichkeit, über das jeweilige Modem MODEM Informationen in Form von Datensignalen zu senden und zu empfangen. Die Datensignale können z.B. Daten eines Computers PC oder eines lokalen Netzes LAN beinhalten. Im jeweiligen Modem MODEM werden den zu übertragenden Daten eine Senderadresse und eine Zieladresse zugefügt. Die Senderadresse ist die Adresse des Teilnehmers TN, von dem aus die Daten gesendet werden sollen. Die Zieladresse ist die Adresse des Teilnehmers TN, zu dem die Daten übertragen werden sollen. Ein Datensignal beinhaltet somit eine Senderadresse, eine Zieladresse und teilnehmerspezifische Daten. Ein Modem MODEM eines Teilnehmers TN kann nur Datensignale verarbeiten, bei dem die Zieladresse mit der Adresse des Teilnehmers TN übereinstimmt. Damit ist sichergestellt, daß Daten, die für einen Teilnehmer TN bestimmt sind, nicht auch von einem anderen Teilnehmer empfangen werden können.

Zum Senden von Informationen in Form von Datensignalen von einem Teilnehmer TN zu einem anderen, z.B. von Teilnehmer TN5 zu Teilnehmer TN1, werden zunächst den zu übertragenden Daten die Adresse des Teilnehmers TN5 als Senderadresse und die Adresse des Teilnehmers TN1 als Zieladresse zugefügt. Das so entstandene Datensignal wird im Modem MODEM von Teilnehmer TN5 so moduliert, daß es im Frequenzband des Rückkanals des Breitbandkommunikationssystemes SYS übertragbar ist. Das Datensignal wird sodann über den Rückkanal und über den Breitbandnetzabschluß BONT2 zu Zentrale ZE übertragen. Die Zentrale ZE empfängt das Datensignal und verarbeitet es derart, daß es im Frequenzband des Vorwärtskanals des Breitbandkommunikationssystemes SYS übertragbar ist, indem eine Frequenzumsetzung durchgeführt wird. Das Datensignal wird dann aufgrund der Baumstruktur des Breitbandkommunikationssystemes SYS zu allen Teilnehmern TN1 bis TN5 übertragen. Teilnehmer TN1 erkennt im Datensignal die Zieladresse als die eigene und demoduliert im Modem MODEM das Datensignal. Somit sind die Daten von Teilnehmer TN5 mit seiner Adresse zu Teilnehmer TN1 übertragen worden. Teilnehmer TN1 kann zur Bestätigung des Empfangs der Daten von Teilnehmer TN5 eine Rückmeldung zu Teilnehmer TN5 senden. Diese Rückmeldung beinhaltet z.B. neben der Ziel- und der Senderadresse eine Angabe über den Umfang der empfangenen Daten.

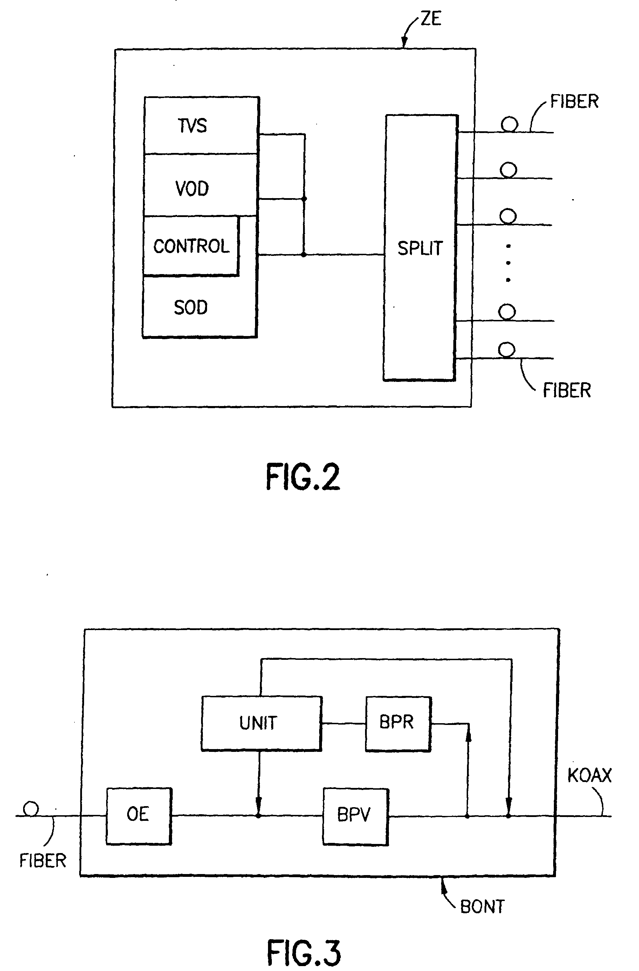

. Fig. 2 zeigt nun eine schematische Darstellung der Zentrale aus Fig. 1. Die Zentrale ZE beinhaltet einen Fernseh- und Rundfunk-Server TVS, einen Video-auf-Abruf-Server VOD, einen Service-auf-Abruf-Server SOD mit einer Steuereinrichtung CONTROL und einen optischen Strahlteiler SPLIT. Der Fernseh- und Rundfunk-Server TVS und der Video-auf-Abruf-Server VOD dienen dem Verteilen von Rundfunk-, Fernseh- und Videosignalen. Die einzelnen Signale werden überlagert und einem optischen Strahlteiler SPLIT zugeführt, über den sie zu den Breitbandnetzabschlüssen BONT und den Teilnehmern TN übertragen werden.

Der Service-auf-Abruf-Server SOD dient als Relaisstation bei der Übertragung von Datensignalen von einem Teilnehmer zu einem anderen Teilnehmer. Der Service-Auf-Abruf-Server SOD empfängt die Datensignale des einen Teilnehmers im Rückkanal des Breitbandkommunikationssystemes SYS, verarbeitet die Datensignale in der Steuereinrichtung CONTROL und sendet die Datensignale über den Vorwärtskanal des Breitbandkommunikationssystemes SYS aufgrund der Baumstruktur des Breitbandkommunikationssystemes SYS zu allen mit der Zentrale verbundenen Teilnehmern, wodurch auch der andere Teilnehmer erreicht wird und somit die Übertragung der Datensignale gewährleistet wird. Dazu findet in der Steuereinrichtung eine Frequenzumsetzung statt, bei der die Datensignale aus dem Frequenzbereich des Rückkanals in den Frequenzbereich des Vorwärtskanals umgesetzt werden.

Fig. 3 zeigt nun eine schematische Darstellung einer der beiden äquivalenten Breitbandnetzabschlüsse aus Fig. 1. Der Breitbandnetzabschluß BONT beinhaltet einen optisch/elektrischen Wandler OE, eine Steuereinheit UNIT, einen Bandpaß für den Rückkanal BPR und einen Bandpaß für den Vorwärtskanal BPV. Die Bandpässe BPR, BPV sind z.B. passive elektrische Filter.

Die von der Zentrale ZE zum Breitbandnetzabschluß BONT übertragenen Signale werden im optisch/elektrischen Wandler OE optisch/elektrisch gewandelt und über den Bandpaß für den Vorwärtskanal BPV den mit dem Breitbandnetzabschluß BONT verbundenen Teilnehmern TN zugeführt. Der Bandpaß für den Vorwärtskanal BPV ist nur für solche Signale durchlässig, deren Frequenz im Frequenzbereich des Vorwärtskanals liegen; insbesondere ist der Bandpaß für den Vorwärtskanal BPV für Signale deren Frequenz im Frequenzbereich des Rückkanals liegen undurchlässig.

Die von den Teilnehmern TN zum Breitbandnetzabschluß übertragenen Signale im Rückkanal werden im Bandpaß für den Rückkanal BPR gefiltert und der Steuereinheit UNIT zugeführt. Der Bandpaß für den den Rückkanal BPR ist nur für solche Signale durchlässig, deren Frequenz im Frequenzbereich des Rückkanals liegen. In der Steuereinheit UNIT findet eine Überwachung von Kollisionen statt. Da mehrere Teilnehmer TN über eine gemeinsame Leitung KOAX mit einem Breitbandnetzabschluß BONT verbunden sind, und alle Teilnehmer TN gleichermaßen Zugriff auf die gemeinsame Leitung KOAX haben, können bei zeitgleichem Senden von Informationen unterschiedlicher Teilnehmer TN auf der gemeinsamen Leitung Kollisionen auftreten. Die Erkennung von Kollisionen erfolgt z.B. über einen Schwellwertdetektor, der ein Alarmsignal ausgibt, falls die Amplitude des überwachten Signals einen vorgegebenen Schwellwert übersteigt. Tritt eine Kollision auf, so wird die Übertragung der Kollision zur Zentrale unterbunden und alle mit den jeweiligen Breitbandnetzabschluß BONT verbundenen Teilnehmer TN erhalten durch die Steuereinheit UNIT über den Vorwärtskanal eine Rückmeldung über das Auftreten einer Kollision.
Die Teilnehmer TN wiederholen ihren Sendevorgang nach einer durch einen Zufallsgenerator bestimmten Zeitspanne. Der Zufallsgenerator befindet sich im Modem MODEM. Tritt keine Kollision auf, so werden die Signale der Teilnehmer TN durch die Steuereinheit UNIT zur Zentrale ZE weitergeleitet.

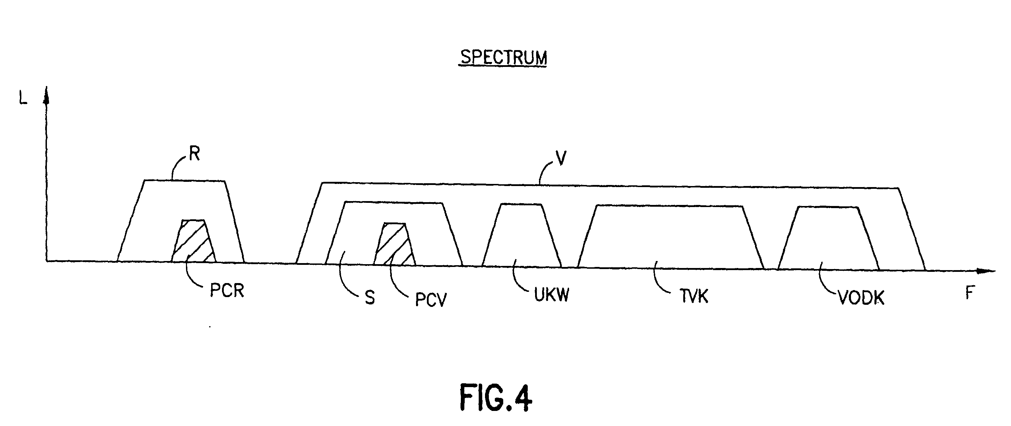

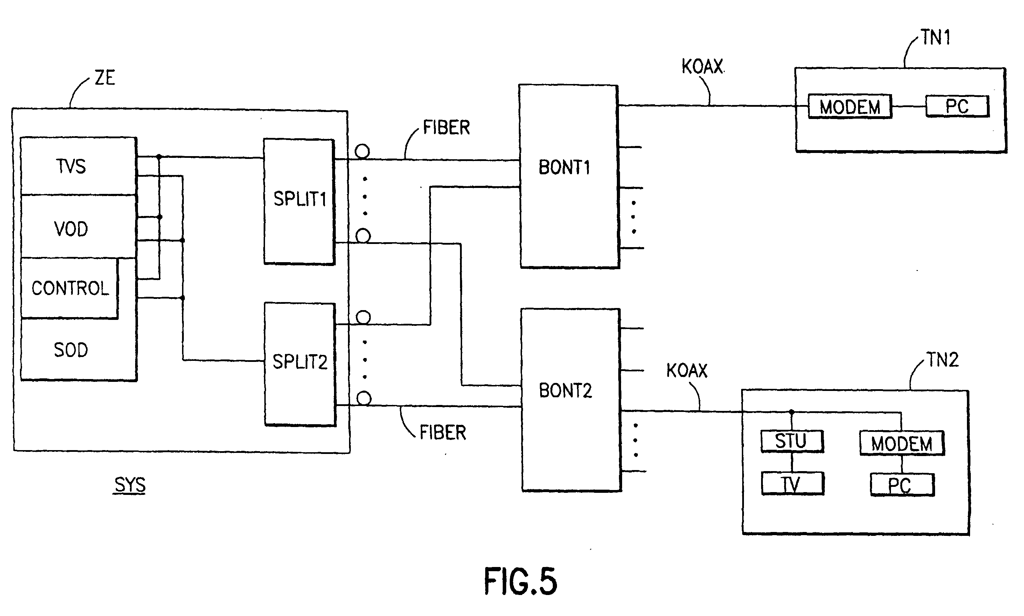

.Fig. 4 zeigt nun ein Leistungsdichtespektrum für die im Breitbandkommunikationssystem SYS aus Fig. 1 und Fig. 5 übertragenen Signale.

Im Leistungsdichtespektrum SPEKTRUM ist auf der Vertikalen die Leistungsdichte L der Signale und auf der Horizontalen die Frequenz F aufgetragen. In einem unteren Frequenzbereich von ca. 5 MHz bis 45 MHz befindet sich der Rückkanal R. Im Rückkanal R ist ein z.B. 10 MHz breiter Kanal, der Datenkanal im Rückkanal PCR, zur Übertragung von Datensignalen von Teilnehmern TN zur Zentrale ZE reserviert. In einem oberen Frequenzbereich von ca. 50 MHz bis 862 MHz befindet sich der Vorwärtskanal V. Der Vorwärtskanal V beinhaltet einen Steuerkanal S, einen Rundfunkkanal UKW, einen Fernsehkanal TVK und einen Video-auf-Abruf-Kanal VODK. Im Steuerkanal S werden z.B. Informationen für die Set-Top-Konverter STU zur Freischaltung von angeforderten Videosignalen übertragen. Im Steuerkanal S ist ein z.B. 10 MHz breiter Kanal, der Datenkanal im Vorwärtskanal PCV, zur Übertragung von Datensignalen von der Zentrale ZE zu den Teilnehmern TN reserviert.

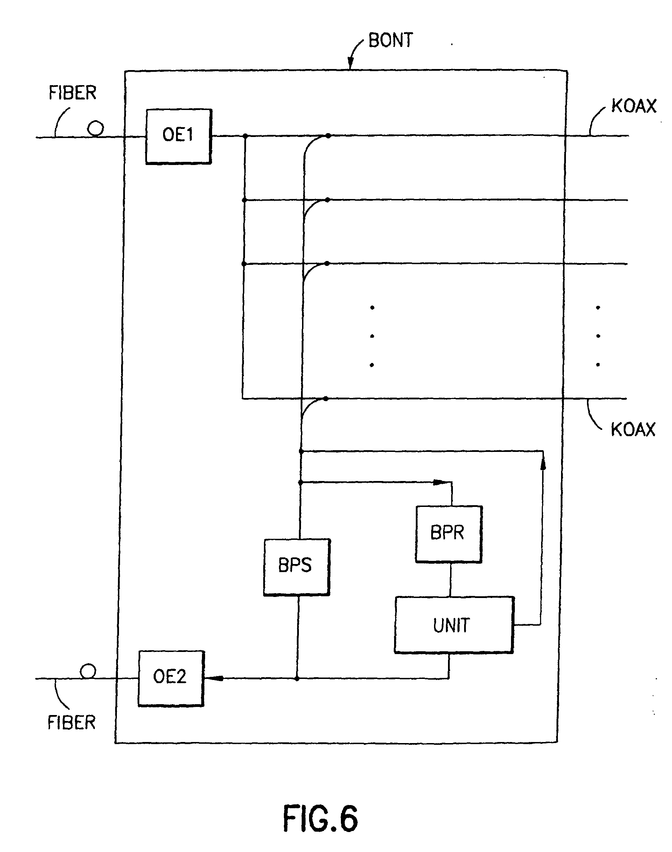

Ein zweites Ausführungsbeispiel der Erfindung wird nun anhand der Figuren 5 und 6 beschrieben.

Fig. 5 zeigt ein Breitbandkommunikationssystem in Verbindung mit zwei Teilnehmern.

Das Breitbandkommunikationssystem SYS hat eine Zentrale ZE und zwei Breitbandnetzabschlüsse BONT1, BONT2. Die Zentrale ZE hat einen Fernseh- und Rundfunk-Server TVS zum Senden von Fernseh- und Rundfunksignalen, einen Video-auf-Abruf-Server VOD zum Senden von Videosignalen, einen Service-Auf-Abruf-Server SOD mit einer Steuereinrichtung CONTROL zum Senden, Verarbeiten und Empfangen von Datensignalen und zwei optische Strahlteiler SPLIT1, SPLIT2. Die Fernseh-, Rundfunk- und Videosignale werden über den ersten optischen Strahlteiler SPLIT1 und über optische Glasfaserleitungen FIBER zu den Breitbandnetzabschlüssen BONT1, BONT2 übertragen. Die Datensignale werden von und zur Zentrale ZE über den zweiten optischen Strahlteiler SPLIT 2 von und zu den Breitbandnetzabschlüssen BONT1, BONT2 übertragen. Über den zweiten Strahlteiler SPLIT2 wird der Steuer- und der Rückkanal des Breitbandkommunikationssystemes SYS übertragen.

Mit dem ersten Breitbandnetzabschluß BONT1 ist über eine separate elektrische Koaxleitung KOAX ein erster Teilnehmer TN1 verbunden. Der Teilnehmer TN1 hat ein Modem MODEM und ein Teilnehmerendgerät PC, vorzugsweise ein Datenendgerät PC, wie z.B. einen Computer PC. Mit dem zweiten Breitbandnetzabschluß BONT2 ist ein zweiter Teilnehmer TN2 über eine separate elektrische Koaxialleitung KOAX verbunden. Der Teilnehmer TN2 hat einen Set-Top-Konverter STU, einen Fernseher TV, ein Modem MODEM und ein Teilnehmerendgerät PC, z.B. einen Computer PC. Der Teilnehmer TN2 kann über den Set-Top-Konverter Fernseh-, Rundfunk- und Videosignale empfangen, diese auf dem Fernseher darstellen, und zusätzlich spezielle Fernseh- und Videosignale über den Rückkanal des Breitbandkommunikationssystemes SYS beim Fernseh- und Rundfunk-Server TVS oder beim Video-auf-Abruf-Server VOD anfordern. Der Teilnehmer TN2 kann über das Modem MODEM Datensignale empfangen und senden. Zur Übertragung von Datensignalen von Teilnehmern TN2 zu Teilnehmer TN1 werden die Datensignale zunächst im Rückkanal über den Breitbandnetzabschluß BONT2 und den optischen Strahlteiler SPLIT2 zum Service-auf-Abruf-Server SOD übertragen. In der Steuereinrichtung CONTROL im Service-auf-Abruf-Server SOD findet eine Frequenzumsetzung statt, die die Datensignale aus dem Frequenzbereich des Rückkanals in den Frequenzbereich des Steuerkanals umsetzt. Eine Möglichkeit der Realisierung der Frequenzumsetzung ist aus "Lehrbuch der Fernmeldetechnik", v.K. Bergmann, Band 1, 1986 Fachverlag Schiele & Schön GmbH, Seiten 377-379 bekannt. Die Datensignale werden dann im Steuerkanal über den optischen Strahlteiler SPLIT2 und den Breitbandnetzabschluß BONT1 zum Teilnehmer TN1 übertragen.
Die Datensignale beinhalten eine Senderadresse, eine Zieladresse und die zu übertragenden Daten. Die Senderadresse ist die Adresse des Teilnehmers TN von dem aus Daten gesendet werden sollen. Die Zieladresse ist die Adresse des Teilnehmers TN zu dem die Daten übertragen werden sollen. Ein Modem MODEM eines Teilnehmers TN kann nur Datensignale verarbeiten, bei dem die Zieladresse mit der Adresse des Teilnehmers übereinstimmt, d.h. jedes Modem MODEM erhält eine teilnehmerspezifische Adresse. Damit ist sichergestellt, daß Daten, die für einen Teilnehmer TN bestimmt sind, nicht auch von einem anderen Teilnehmer TN empfangen werden können.

Fig. 6 zeigt nun einen der beiden äquivalenten Breitbandnetzabschlüsse aus Fig. 5.

Der Breitbandnetzabschluß BONT hat zwei optisch/elektrische Wandler OE1, OE2, eine Steuereinheit UNIT, einen Bandpaß für den Rückkanal BPR und einen Bandpaß für den Steuerkanal BPS. Die Bandpässe BPR, BPS sind z.B. passive elektrische Filter.

Die von der Zentrale ZE zum Breitbandnetzabschluß BONT übertragenen Fernseh-, Rundfunk- und Videosignale werden im ersten optisch/elektrischen Wandler OE1 optisch/elektrisch gewandelt und über separate, in Sternstruktur geschaltete Koaxialleitungen KOAX den einzelnen Teilnehmern TN zugeführt. Die im Steuerkanal zum Breitbandnetzabschluß BONT übertragenen Signale werden im zweiten optisch/elektrischen Wandler OE2 optisch/elektrisch gewandelt und über den Bandpaß für den Steuerkanal BPS in Sternstruktur den separaten Koaxialleitungen KOAX zugeführt und so zu den einzelnen Teilnehmern TN übertragen. Der Bandpaß für den Steuerkanal BPS ist nur für Signale durchlässig, deren Frequenz im Frequenzbereich des Steuerkanals liegen.

.Die von den Teilnehmern TN zum Breitbandnetzabschluß übertragenen Signale im Rückkanal werden im Bandpaß für den Rückkanal BPR gefiltert und der Steuereinheit UNIT zugeführt. Der Bandpaß für den den Rückkanal BPR ist nur für solche Signale durchlässig, deren Frequenz im Frequenzbereich des Rückkanals liegen. In der Steuereinheit UNIT findet eine Überwachung von Kollisionen statt. Da mehrere Teilnehmer TN über eine gemeinsame Leitung KOAX mit einem Breitbandnetzabschluß BONT verbunden sind, und alle Teilnehmer TN gleichermaßen Zugriff auf die gemeinsame Leitung KOAX haben, können bei zeitgleichem Senden von Informationen unterschiedlicher Teilnehmer TN auf der gemeinsamen Leitung Kollisionen auftreten. Die Erkennung von Kollisionen erfolgt z.B. über einen Schwellwertdetektor, der ein Alarmsignal ausgibt, falls die Amplitude des überwachten Signals einen vorgegebenen Schwellwert übersteigt. Tritt eine Kollision auf, so wird die Übertragung der Kollision zur Zentrale unterbunden und alle mit den jeweiligen Breitbandnetzabschluß BONT verbundenen Teilnehmer TN erhalten durch die Steuereinheit UNIT über den Vorwärtskanal eine Rückmeldung über das Auftreten einer Kollision.
Die Teilnehmer TN wiederholen ihren Sendevorgang nach einer durch einen Zufallsgenerator bestimmten Zeitspanne. Der Zufallsgenerator befindet sich im Modem MODEM. Tritt keine Kollision auf, so werden die Signale der Teilnehmer TN durch die Steuereinheit UNIT zur Zentrale ZE weitergeleitet.

Bei den Ausführungsbeispielen hat jedes Breitbandkommunikationssystem SYS eine Zentrale ZE. Die Zentrale ZE kann auch in eine Hauptzentrale und mehrere Unterzentralen aufgeteilt werden. So kann z.B. in der Hauptzentrale ein Fernsehund Rundfunk-Server TVS sein, der alle Teilnehmer TN des Breitbandkommunikationssystemes SYS mit Fernseh- und Rundfunksignalen versorgt. In mehreren Unterzentralen können dann z.B. lokale Video-auf-Abruf Server VOD und/oder Service-auf-Abruf-Server SOD eine Gruppe von Teilnehmern mit Videound Datensignalen versorgen. Dies hat den Vorteil, daß mehrere Server auf regional unterschiedliche Teilnehmerwünsche reagieren könnten.

Bei den Ausführungsbeispielen findet die Kollisionserkennung in der Steuereinheit UNIT im Breitbandnetzabschluß statt. Anstelle in der Steuereinheit UNIT, kann die Kollisionserkennung auch in der Steuereinrichtung CONTROL in der Zentrale ZE stattfinden. Dies hat den Vorteil, daß Standard-Breitbandnetzabschlüsse verwendet werden können.

Ferner sind in den Ausführungsbeispielen die Set-Top-Konverter STU und die Modems MODEM getrennte Geräte. Die Funktion des Modems MODEM kann auch in einen Set-Top-Konverter STU eingearbeitet sein. Dies bringt neben der Einsparung eines Gerätes und den damit verbundenen Kostenvorteilen und der Erhöhung der Bedienerfreundlichkeit, den weiteren Vorteil der Einsparung von Schaltungstechnik aufgrund des Wegfalls der doppelten Realisierung von Bauteilen, wie z.B. der Spannungsversorgung.

Des weiteren sind in den Ausführungsbeispielen in den Zentralen ZE und Breitbandnetzabschlüssen BONT der Übersichtlichtkeit halber keine Verstärker, keine Dämpfungsglieder, keine Entzerrer, etc., dargestellt, deren Verwendung, Anordnung, Vorteile oder gar Notwendigkeit dem Fachmann, z.B. aus "Elektrisches Nachrichtenwesen", 3. Quartal 1993, Seiten 284 bis 259 bekannt sind.

In den Ausführungsbeispielen ist die Anzahl der Breitbandnetzabschlüsse BONT und der Teilnehmer TN beispielhaft. So kann ein Breitbandkommunikationssystem SYS z.B. 100 Breitbandnetzabschlüsse mit je 150 Teilnehmern beinhalten.

Bei den Ausführungsbeispielen ist als Zieladresse stets nur die Adresse eines Teilnehmers angegeben. Die Zieladresse kann auch mehrere Teilnehmer adressieren, indem als Zieladresse z.B. eine für eine Gruppe von Teilnehmern gültige Adresse genutzt wird. Damit könnte durch die Übertragung eines Datensignals eine Gruppe von Teilnehmern erreicht werden, was z.B. beim Senden von Rundschreiben vorteilhaft wäre.

.In den Ausführungsbeispielen ist die Angabe der Frequenzbereiche für den Vorwärts- und den Rückkanal, sowie die Frequenzgetrenntlage der beiden Kanäle beispielhaft. So kann der Vorwärtskanal z.B. den Frequenzbereich 0-862 MHz mit dem Frequenzbereich 300 MHz-310 MHz für die Datensignalübertragung und der Rückkanal den Frequenzbereich 5 MHz- 30 MHz belegen.

## Patentansprüche

1. Breitbandkommunikationssystem (SYS) zur bidirektionalen Übertragung von Informationen zwischen einer Zentrale (ZE) und mehreren Teilnehmern (TN),
bei dem Gruppen von Teilnehmern (TN) jeweils mit einem Breitbandnetzabschluß (BONT) verbunden und die Breitbandnetzabschlüsse (BONT) jeweils mit der Zentrale (ZE) verbunden sind,
bei dem Informationen von der Zentrale (ZE) zu den Teilnehmern (TN) in einem breitbandigen Vorwärtskanal (V) und Informationen von den Teilnehmern (TN) zur Zentrale (ZE) in einem schmalbandigen Rückkanal (R) übertragbar sind, und
bei dem die im Rückkanal (R) übertragenen Informationen eines Teilnehmers (TN) über eine in der Zentrale (ZE) befindlichen Steuereinrichtung (CONTROL) den mehreren Teilnehmern (TN) über einen Kanal (PCV) im Vorwärtskanal (V) zuweisbar sind,
**dadurch gekennzeichnet , daß** jeder Breitbandnetzabschluß (BONT) jeweils eine Steuereinheit (UNIT) beinhaltet, und daß jede der Steuereinheiten (UNIT) gleichzeitiges Senden von Informationen von unterschiedlichen Teilnehmern (TN) einer Gruppe erkennen, und die Weiterleitung dieser Informationen zur Zentrale (ZE) unterbinden kann.

2. Breitbandkommunikationssystem (SYS) nach Anspruch 1, **dadurch gekennzeichnet, daß** die im Rückkanal (R) übertragenen Informationen des einen Teilnehmers (TN) Datensignale mit einer Senderadresse, einer Zieladresse und mit Daten sind.

3. Breitbandkommunikationssystem nach Anspruch 2, **dadurch gekennzeichnet, daß** die Steuereinrichtung (CONTROL) Mittel zur Frequenzumsetzung der Datensignale aus dem Frequenzbereich des Rückkanals (R) in den Frequenzbereich des Vorwärtskanals (V) hat.

4. Breitbandkommunikationssystem nach Anspruch 2, **dadurch gekennzeichnet, daß** die Zieladresse teilnehmerspezifisch kodierbar ist.

5. Breitbandkommunikationssystem nach Anspruch 2, **dadurch gekennzeichnet, daß** über die Zieladresse eine Gruppe von Teilnehmern (TN) adressierbar ist.

6. Breitbandkommunikationssystem nach Anspruch 2, **dadurch gekennzeichnet, daß** wenigstens ein Teil der Teilnehmer (TN) jeweils ein Teilnehmerendgerät (PC) und ein Modem (MODEM) hat, und daß über das Modem (MODEM) Datensignale über den Rückkanal (R) sendbar und über den Vorwärtskanal (V) empfangbar sind.

7. Breitbandkommunikationssystem nach Anspruch 6, **dadurch gekennzeichnet, daß** das Teilnehmerendgerät (PC) ein Computer ist.

8. Breitbandkommunikationssystem nach Anspruch 1, **dadurch gekennzeichnet, daß** die von der Zentrale (ZE) zu den Teilnehmern (TN) übertragenenen Informationen Fernseh- und Videosignale beinhalten.

9. Breitbandkommunikationssystem nach Anspruch 8, **dadurch gekennzeichnet, daß** sich in der Zentrale (ZE) ein Video-auf-Abruf Server (VOD) befindet, daß jeder Teilnehmer (TN) über einen Set-Top-Konverter (STU) Videosignale über den Rückkanal (R) abrufen und über den Vorwärtskanal (V) empfangen kann, und daß im Set-Top-Konverter (STU) ein Modem (MODEM) integriert ist, über das Informationen mit einer teilnehmerspezifischen Senderadresse, einer teilnehmerspezifischen Zieladresse und mit Daten über den Rückkanal (R) sendbar und über den Vorwärtskanal (V) empfangbar sind.

10. Verfahren zum bidirektionalen Übertragen von Informationen zwischen einer Zentrale (ZE) und mehreren, in Gruppen aufgeteilten Teilnehmern (TN) eines Breitbandverteilnetzes,
bei dem Informationen von der Zentrale (ZE) zu den Teilnehmern (TN) in einem breitbandigen Vorwärtskanal (V) und Informationen von den Teilnehmern (TN) zur Zentrale (ZE) in einem schmalbandigen Rückkanal (R) übertragen werden, und
bei dem die im Rückkanal (R) übertragenen Informationen eines Teilnehmers (TN) über eine in der Zentrale (ZE) befindlichen Steuereinrichtung (CONTROL) den mehreren Teilnehmern (TN) über einen Kanal (PCV) im Vorwärtskanal (V) zugewiesen werden, **dadurch gekennzeichnet, daß** gleichzeitiges Senden von Informationen von unterschiedlichen Teilnehmern (TN) einer Gruppe für jede Gruppe vor der zentrale separat erkannt und die Weiterleitung dieser Informationen zur Zentrale (ZE) unterbunden werden kann.

11. Verfahren nach Anspruch 10, **dadurch gekennzeichnet, daß** die Informationen des einen Teilnehmers (TN) Datensignale mit einer teilnehmerspezifischen Senderadresse, einer teilnehmerspezifischen Zieladresse und mit Daten sind.

12. Verfahren nach Anspruch 10, **dadurch gekennzeichnet, daß** bei gleichzeitigem Senden mehrerer, einer Gruppe zugehöriger Teilnehmer (TN) über eine Steuereinheit (UNIT) eine Rückmeldung zu allen Teilnehmern (TN) der jeweiligen Gruppe erfolgt.

## Claims

1. A broadband communication system (SYS) for two-way transmission of information between a center (ZE) and a plurality of subscribers (TN),
wherein groups of subscribers (TN) are connected to one broadband network termination (BONT) each, the broadband network terminations (BONT) being connected to the center (ZE),
wherein information is transmissible from the center (ZE) to the subscribers (TN) in a broadband downstream channel (V) and from the subscribers (TN) to the center (ZE) in a narrow-band return channel (R), and
wherein the information transmitted from one of the subscribers (TN) in the return channel (R) is assignable to the plurality of subscribers (TN) via a channel (PCV) in the downstream channel (V) by means of a control facility (CONTROL) located at the center (ZE),
**characterized in that** each of the broadband network terminations (BONT) comprises a control unit (UNIT), and that each of the control units (UNIT) can detect any simultaneous transmission of information from different subscribers (TN) of a group and can prevent said information from being forwarded to the center (ZE).

2. A broadband communication system (SYS) as claimed in claim 1, **characterized in that** the information transmitted from said one subscriber (TN) in the return channel (R) consists of data signals containing a source address, a destination address, and data.

3. A broadband communication system as claimed in claim 2, **characterized in that** the control facility (CONTROL) comprises means for translating the frequency of the data signals from the frequency band of the return channel (R) to the frequency band of the downstream channel (V).

4. A broadband communication system as claimed in claim 2, **characterized in that** the destination address is encodable in a subscriber-specific code.

5. A broadband communication system as claimed in claim 2, **characterized in that** via the destination address, a group of subscribers (TN) is addressable.

6. A broadband communication system as claimed in claim 2, **characterized in that** at least part of the subscribers (TN) each have a subscriber terminal (PC) and a modem (MODEM), and that via the modem (MODEM), data signals are transmissible over the return channel (R) and receivable over the downstream channel (V).

7. A broadband communication system as claimed in claim 6, **characterized in that** the subscriber terminal (PC) is a computer.

8. A broadband communication system as claimed in claim 1, **characterized in that** the information transmitted from the center (ZE) to the subscribers (TN) contains television and video signals.

9. A broadband communication system as claimed in claim 8, **characterized in that** the center (ZE) comprises a video-on-demand server (VOD), that via a set-top converter (STU), each subscriber (TN) can request video signals over the return channel (R) and receive these over the downstream channel (V), and that the set-top converter (STU) incorporates a modem (MODEM) via which information containing a subscriber-specific source address, a subscriber-specific destination address, and data is transmissible over the return channel (R) and receivable over the downstream channel (V).

10. A method for two-way transmission of information between a center (ZE) and a plurality of subscribers (TN) of a broadband distribution network, the subscribers being divided into groups,
wherein information is transmitted from the center (ZE) to the subscribers (TN) in a broadband downstream channel (V), and from the subscribers (TN) to the center (ZE) in a narrow-band return channel (R), and
wherein the information transmitted from one of the subscribers (TN) in the return channel (R) is assigned to the plurality of subscribers (TN) via a channel (PCV) in the downstream channel (V) by means of a control facility (CONTROL) located at the center (ZE),
**characterized in that** any simultaneous transmission of information from different subscribers (TN) of a group can be detected separately for each group ahead of the center, and that forwarding of this information to the center (ZE) can be prevented.

11. A method as claimed in claim 10, **characterized in that** the information of said one subscriber (TN) consists of data signals containing a subscriber-specific source address, a subscriber-specific destination address, and data.

12. A method as claimed in claim 10, **characterized in that** when two or more subscribers (TN) of a group are transmitting simultaneously, all subscribers (TN) of the respective group are notified thereof via a control unit (UNIT).

## Revendications

1. Système de communication à large bande (SYS) pour la transmission bidirectionnelle d'informations entre un central (ZE) et plusieurs abonnés (TN),
avec lequel des groupes d'abonnés (TN) sont reliés respectivement à une terminaison réseau à large bande (BONT) et les terminaisons réseau à large bande (BONT) sont reliées respectivement au central (ZE),
avec lequel des informations peuvent être transmises du central (ZE) aux abonnés (TN) dans une voie d'aller (V) à large bande et des informations des abonnés (TN) au central (ZE) dans une voie de retour (R) à bande étroite, et
avec lequel les informations transmises dans la voie de retour (R) d'un abonné (TN) peuvent être attribuées au moyen d'un dispositif de contrôle (CONTROL) se trouvant dans le central (ZE) à plusieurs abonnés (TN) au moyen d'un canal (PCV) dans la voie d'aller (V),
**caractérisé en ce que** chaque terminaison réseau à large bande (BONT) contient respectivement une unité de commande (UNIT) et **en ce que** chacune des unités de commande (UNIT) détecte un envoi simultané d'informations de différents abonnés (TN) d'un groupe, et peut interrompre la transmission de ces informations au central (ZE).

2. Système de communication à large bande (SYS) selon la revendication 1, **caractérisé en ce que** les informations transmises dans la voie de retour (R) d'un abonné (TN) sont des signaux de données avec une adresse émetteur, une adresse de destination et avec des données.

3. Système de communication à large bande selon la revendication 2, **caractérisé en ce que** le dispositif de commande (CONTROL) a des moyens pour la conversion de fréquence des signaux de données provenant de la plage de fréquences de la voie de retour (R) dans la plage de fréquences de la voie d'aller (V).

4. Système de communication à large bande selon la revendication 2, **caractérisé en ce que** l'adresse de destination peut être codée de façon spécifique à l'abonné.

5. Système de communication à large bande selon la revendication 2, **caractérisé en ce qu'**un groupe d'abonnés (TN) peut être contacté par l'adresse de destination.

6. Système de communication à large bande selon la revendication 2, **caractérisé en ce qu'**au moins une partie des abonnés (TN) a respectivement un terminal d'abonné (PC) et un modem (MODEM) et **en ce que** par le modem (MODEM), des signaux de données peuvent être envoyés par la voie de retour (R) et peuvent être reçus par la voie d'aller (V).

7. Système de communication à large bande selon la revendication 6, **caractérisé en ce que** le terminal d'abonné (PC) est un ordinateur.

8. Système de communication à large bande selon la revendication 1, **caractérisé en ce que** les informations transmises du central (ZE) aux abonnés (TN) contiennent des signaux télé et vidéo.

9. Système de communication à large bande selon la revendication 8, **caractérisé en ce qu'**un serveur vidéo sur appel (VOD) se trouve dans le central (ZE), **en ce que** chaque abonné (TN) peut appeler des signaux vidéo par un convertisseur Set-Top (STU) par la voie de retour (R) et en recevoir par la voie d'aller (V), et **en ce que** dans le même convertisseur Set-Top (STU) est intégré un modem (MODEM), par lequel des informations peuvent être envoyées avec une adresse émetteur spécifique à l'abonné, une adresse de destination spécifique à l'abonné et avec des données par la voie de retour (R) et peuvent être reçues par la voie d'aller (V).

10. Procédé pour la transmission bidirectionnelle d'informations entre un central (ZE) et plusieurs abonnés (TN), répartis en groupes, d'un réseau de répartiteur à large bande,
dans lequel des informations sont transmises du central (ZE) aux abonnés (TN) dans une voie d'aller (V) à large bande et des informations sont transmises des abonnés (TN) au central (ZE) dans une voie de retour (R) à bande étroite, et
dans lequel les informations transmises dans la voie de retour (R) d'un abonné (TN) peuvent être attribuées au moyen du dispositif de commande (CONTROL) se trouvant dans le central (ZE) à plusieurs abonnés (TN) par un canal (PCV) situé dans la voie d'aller (V), **caractérisé en ce qu'**un envoi simultané d'informations d'abonnés (TN) différents d'un groupe peut être détecté séparément pour chaque groupe avant le central et la transmission de ces informations au central (ZE) peut être supprimée.

11. Procédé selon la revendication 10, **caractérisé en ce que** les informations d'un abonné (TN) sont des signaux de données avec une adresse émetteur spécifique à l'abonné, une adresse de destination spécifique à l'abonné et des données.

12. Procédé selon la revendication 10, **caractérisé en ce que**, dans le cas d'un envoi simultané de plusieurs abonnés (TN) par une unité de commande (UNIT), un message de retour est envoyé à tous les abonnés (TN) du groupe concerné.
